# EUROPÄISCHE PATENTSCHRIFT

(11) **EP 2 444 447 B1**
(45) Veröffentlichungstag und Bekanntmachung des Hinweises auf die Patenterteilung: **25.03.2020**
(21) Anmeldenummer: 11182859.6
(22) Anmeldetag: 27.09.2011
(51) Int. Cl.: C08G 77/26, C08L 83/08, D06M 15/643, D06M 15/647, C11D 3/37

(54) **Polysiloxane mit stickstoffhaltigen Gruppen**
Polysiloxanes with groups containing nitrogen
Polysiloxane doté de groupes contenant de l'azote

(30) Priorität: 25.10.2010 DE 102010042861; 30.11.2010 DE 102010062156
(43) Veröffentlichungstag der Anmeldung: 25.04.2012
(73) Patentinhaber: Evonik Operations GmbH, 45128 Essen (DE)
(72) Erfinder: Henning, Frauke, Dr., 45130 Essen (DE); Ferenz, Michael, Dr., 45147 Essen (DE); Knott, Wilfried, Dr., 45355 Essen (DE); Silber, Stefan, Dr., 47804 Krefeld (DE); Wenk, Hans Henning, Dr., 45470 Mülheim an der Ruhr (DE); Kuppert, Dirk, Dr., 63739 Aschaffenburg (DE); Koenig, Frank, 45884 Gelsenkirchen (DE)
(74) Vertreter: Evonik Patent Association

(56) Entgegenhaltungen:
- EP-A1- 0 515 915
- EP-A1- 0 856 553
- EP-A1- 0 915 119
- EP-A1- 1 035 152
- EP-A1- 1 792 609
- EP-A2- 1 988 116
- EP-B1- 0 342 830
- WO-A1-2006/013146
- WO-A1-2006/081927
- WO-A1-2006/098408
- DE-A1- 10 214 139
- JP-A- 2002 167 437
- JP-A- 2006 182 949
- US-A1- 2004 186 308
- US-B1- 6 207 781
- US-B1- 6 255 429

## Beschreibung

### Gebiet der Erfindung:

Die vorliegende Erfindung betrifft mit seitständigen Aminofunktionen und mindestens einer weiteren seitständigen funktionellen Gruppe in definierten Verhältnissen modifizierte Polysiloxane, das Verfahren zur Herstellung dieser multifunktionellen Polysiloxane, Zubereitungen, die solche multifunktionellen Polysiloxane enthalten und die Verwendung dieser multifunktionellen Polysiloxane oder deren Zubereitungen.

### Stand der Technik:

Aminofunktionelle Siloxane finden breite Anwendung als Bestandteile von Textilpflegenden Zusammensetzungen, insbesondere von Textil-weichmachendnen Zusammensetzungen, als Bestandteile von Wasch- oder Reinigungsmitteln für Textilien und Hydrophobiermittel. Eine Vielzahl struktureller Variationen dieser Stoffgruppe findet sich beschrieben im Stand der Technik und ist über unterschiedliche Herstellrouten zugänglich. Hierbei sind endständig mit Aminogruppen modifizierte, rein lineare Polydimethylsiloxane in ihrem Modifikationsgrad nicht variabel. Dies ist insofern nachteilig, da sowohl die Zahl als auch die Art der Aminogruppen großen Einfluss auf die Substantivität, d.h. auf das Bindevermögen auf Trägern wie z.B. keratinischen Substanzen oder auch auf Textilien, des Aminopolysiloxans ausüben. So ist der Gesamtstickstoffgehalt eines Aminosiloxans eine wichtige Kennzahl, die unmittelbar mit dessen Substantivität korreliert.
Um die Polymerkette zu verlängern, ohne die Aminofunktionalitäten zu reduzieren, werden ABn-Multiblock-Copolymere beschrieben. Mit zunehmender Kettenlänge werden lineare Copolymere jedoch sehr hochviskos und damit schlecht handhabbar. Die US 5,807,956 und US 5,981,681 lehren nicht-hydrolysierbare Blockcopolymere des (AB)ₙA-Typs mit alternierenden Einheiten bestehend aus Polysiloxan und Amino-Polyalkylenoxid. Hier werden durch Edelmetall-katalysierte Hydrosilylierung α,ω-Dihydrogenpolydimethylsiloxane mit Epoxidgruppen tragenden Olefinen SiC-mäßig verknüpft und die so erhaltenen, Epoxy-terminierten Siloxane mit Amino-terminierten Polyalkylenoxiden zur Umsetzung gebracht. Alternativ wird auch auf die hydrosilylierende Verknüpfung von α,ω-Dihydrogenpolydimethylsiloxanen mit epoxy-terminierten Allylpolyethern und die nachfolgende Umsetzung der so erhaltenen epoxy-funktionalisierten Siloxane mit Diaminen abgestellt.
Polysiloxane mit hohen Modifikationsgraden bei einer unabhängig vom Stickstoffgehalt variabel einstellbarer Kettenlänge sind durch seitständige Funktionalisierung eines Polysiloxans mit Aminogruppen enthaltenden organischen Substituenten zugänglich.

Der Stand der Technik offenbart eine Vielzahl an Schriften zu seitständig modifizierten Aminosiloxanen. Die Herstellung von seitständig modifizierten Aminosiloxanen kann basen- oder säurekatalysiert erfolgen. Die basisch katalysierte Äquilibrierung zur Herstellung, wie beispielsweise in der EP 1 972 330 in den Absätzen [0154] und [0155] dargelegt, kann je nach verwendeten Edukten entweder zu endständig dihydroxyfunktionellen, seitständig aminomodifizierten Polysiloxanen führen oder zu seitständig aminomodifizierten Polysiloxanen führen, deren Kettenenden mit Trimethylsilylgruppen endverkappt sind. Solche endverkappten Polysiloxane weisen im Vergleich zu ihren mit freien SiOH-Gruppen versehenen Strukturanaloga nicht nur eine bessere Lagerstabilität in Substanz auf, sondern verhindern auch bei der Handhabung wässriger Emulsionen solcher Polysiloxane gelartige Ausfällungen und Aufwachsungen. Diese Gelabscheidungen sind bei Applikationen im Textilbereich besonders unerwünscht.

Die säurekatalysierte Kondensationspolymerisation führt gemäß dem Stand der Technik, wie beispielsweise in der US 7,238,768 B2 beschrieben ist, zu aminomodifizierten Polysiloxanen mit Hydroxygruppen oder Alkoxygruppen an den Kettenenden. Zwar ist der Prozess aufgrund niedriger Reaktionstemperaturen und kürzerer Reaktionszeiten vorteilhaft im Vergleich zu basenkatalysierten Äquilibrierungen, dennoch bedingt der kostengünstigere Herstellprozess aufgrund der fehlenden Trimethylsilylendgruppen den Mangel der reduzierten Hydrolysestabilität dieser nicht endverkappten Siloxane.

Aminofunktionelle Polysiloxane werden stetig verbessert, um den damit behandelten textilen Flächengebilden vorteilhafte Effekte zur vermitteln, wie beispielsweise einen Textil-weichmachenden Effekt, Knitterfestigkeit bzw. die schädliche oder negative Effekte, die beim Reinigen und/oder Konditionieren und/oder Tragen auftreten können, wie beispielsweise Verblassen, Vergrauung, usw., zu reduzieren. Darüber hinaus soll bei einem guten Weichgriff des Gewebes auch eine ausreichende Hydrophilie erreicht werden. Ein Nachteil von Textilweichmachenden Formulierungen auf Basis von Polysiloxanen des Standes der Technik ist weiterhin, dass die weichmachende Eigenschaft eines mit ihnen ausgerüsteten Flächengewebes im ungünstigsten Fall schon nach einmaligem Waschen verloren gehen kann. Es besteht daher Bedarf an Textilweichmachenden Polysiloxanen, die sowohl in der Erstausrüstung bei der Textilfertigung als auch bei der Reinigung und Pflege, beispielsweise im Wäsche-Weichspülgang, eine erhöhte Permanenz auf Textilien vorweisen.
Damit wächst die Erfordernis an den Herstellprozess, strukturell genau definierte Polymere hervorzubringen, deren Stickstoffgehalt, Art und Menge der Aminogruppen und deren Kettenlänge unabhängig voneinander einerseits variabel über die Rezeptur einzustellen sind. Zugleich soll der Herstellprozess die konstante Zusammensetzung und reproduzierbare Qualität der Aminogruppen enthaltenden Polymere mit Blick auf die jeweilige Anwendung absichern.
So beschreibt die US 6,171,515 B1 endverkappte sowie dialkoxyfunktionelle Aminopolysiloxane, die in einem der Siloxanpolymerisation nachgeschalteten Syntheseschritt eine Funktionalisierung der primären und sekundären Aminogruppen mit epoxyfunktionellen Monomeren, wie beispielsweise Glycidol, erfahren. Eine ähnliche Funktionalisierung von Aminosiloxanen mit Alkylenoxiden beschreibt die EP0399706. Weitere Funktionalisierungen von aminofunktionellen Polysiloxanen mit Glycerincarbonat oder Gluconolacton sind in der EP 1 972 330 bzw. in J. Phys. Chem. B 2010, 114, 6872-6877 beschrieben.

Zur Erhöhung der Substantivität beschreibt die JP 2002-167437-A seitenständig mit Guanidinoresten funktionalisierte Polysiloxane, die durch Umsetzung der entsprechenden Aminopolysiloxane mit Cyanamid hergestellt werden. Die WO 2006/081927 beschreibt die Kondensationscopolymerisation von einem dihydroxyfunktionellen Polydimethylsiloxan mit einem Guanidinogruppen-haltigem Silan und einem aminogruppenhaltigem Silan. Auch wenn auf diese Weise eine Funktionalisierung des Polysiloxans mit in Art und Menge unterschiedlichen stickstoffhaltigen Gruppen möglich ist, offenbart die WO 2006/081927 keinen Zugang zu endverkappten multiaminofunktionellen Polysiloxanen.

### Beschreibung der Erfindung:

Aufgabe der vorliegenden Erfindung ist es alternative funktionalisierte Aminopolysiloxane bereitzustellen, die sowohl in der Erstausrüstung bei der Textilfertigung als auch bei der Reinigung und Pflege, beispielsweise im Wäsche-Weichspülgang, eine erhöhte Permanenz und/oder Substantivität auf Textilien vorweisen.

Überraschenderweise wird die Aufgabe gelöst durch neue, mit seitständigen Aminofunktionen und mindestens einer weiteren seitständigen und/oder endständigen funktionellen Gruppe in definierten Verhältnissen modifizierte, endverkappte Polysiloxane.

Gegenstand der vorliegenden Erfindung sind daher mit seitständigen Aminofunktionen und mindestens einer weiteren seitständigen und/oder endständigen funktionellen Gruppe in definierten Verhältnissen modifizierte, endverkappte Polysiloxane und deren Herzustellung.
Gegenstand der vorliegenden Erfindung sind Polysiloxane gemäß Formel 1

Mₐ D_{b} D^{A}_{c} D^{B}_{d} D^{c}ₑ T_{f} Q_{g} (Formel 1)

- M: = [R²R¹₂SiO_{1/2}]
- D: = [R¹₂SiO_{2/2}]
- D^{A}: = [R¹Si(R⁷NHR³)O_{2/2}]
- D^{B}: = [R¹SiR⁴O_{2/2}]
- D^{C}: = [R¹SiR⁵O_{2/2}]
- T: = [R¹SiO_{3/2}]
- Q: = [SiO_{4/2}]
wobei gilt
- R¹: unabhängig voneinander gleiche oder verschiedene lineare oder verzweigte, gesättigte oder ungesättigte Kohlenwasserstoffreste mit 1 bis 30 Kohlenstoffatomen oder auch aromatische Kohlenwasserstoffreste mit 6 bis 30 Kohlenstoffatomen bevorzugt Methyl oder Phenyl, insbesondere Methyl;
- R²: unabhängig voneinander gleich R₁, ein Alkoxyrest oder eine Hydroxygruppe, bevorzugt R¹, insbesondere Methyl;
- R³: unabhängig voneinander Wasserstoff oder ein mit Stickstoffatomen substituierter Kohlenwasserstoffrest, beispielsweise ein Aminoethylrest, insbesondere Wasserstoff;
- R⁴: unabhängig voneinander gleiche oder verschiedene lineare oder verzweigte, gesättigte oder olefinisch ungesättigte Kohlenwasserstoffreste mit 8 bis 30 Kohlenstoffatomen, beispielsweise Decyl-, Dodecyl, Tetradecyl-, Hexadecyl-, Octadecyl-, insbesondere Hexadecyl- und Octadecyl-;
- R⁵: unabhängig voneinander gleiche oder verschiedene Substituenten ausgewählt aus der Gruppe der Substituenten der Formel 1a bis 1f 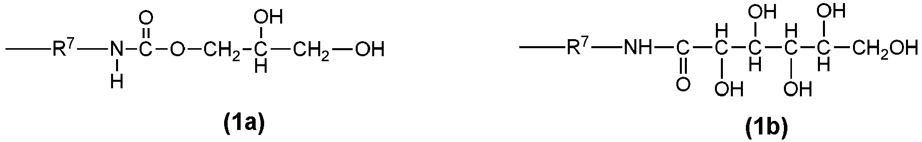 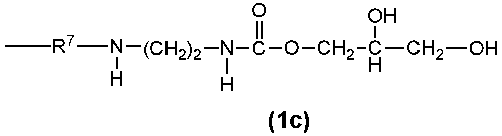 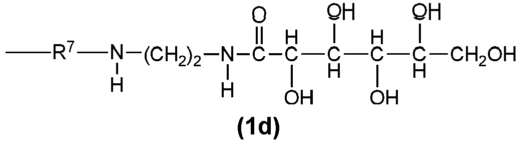 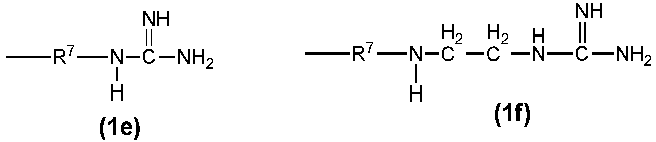
wobei
R⁷ unabhängig voneinander gleiche oder verschiedene lineare oder verzweigte, gesättigte oder ungesättigte, divalente Kohlenwasserstoffgruppe mit 1 bis 20, bevorzugt 1 bis 6 Kohlenstoffatomen und insbesondere eine -(CH₂)₃-Gruppe,
a = 2 - 20; bevorzugt 2 bis 10, insbesondere 2;
b = 10 bis 5000; bevorzugt 20 bis 2000, insbesondere 20-1000;
c = 1 bis 500, bevorzugt 1 bis 100, insbesondere 1 bis 30;
d = 0 bis 500, bevorzugt 0 bis 100, insbesondere 0 bis 30;
e = >0 bis 500, bevorzugt 1 bis 100, insbesondere 1 bis 30;
f = 0 bis 20, bevorzugt 0 bis 10, insbesondere 0;
g = 0 bis 20, bevorzugt 0 bis 10, insbesondere 0;
oder deren ionische Addukte mit protischen Reaktanden H⁺A⁻,
mit der Maßgabe, dass mindestens 50%, bevorzugt mindestens 70% der Reste R² = R¹ sind.

Eine bevorzugte Ausführungsform der erfindungsgemäßen Polysiloxane enthält als Rest R⁵ in Formel 1 mindestens einen Substituenten ausgewählt aus den Formeln 1a bis 1f, mit der Maßgabe, dass der Index c in Formel 1 größer ist als der Index e.

Die verschiedenen Monomereinheiten der in den Formeln angegebenen Siloxanketten können untereinander blockweise aufgebaut sein mit einer beliebigen Anzahl an Blöcken und einer beliebigen Sequenz oder einer statistischen Verteilung unterliegen. Die in den Formeln verwendeten Indices sind als statistische Mittelwerte zu betrachten.

Ein weiterer Gegenstand der Erfindung sind die ionischen Addukte der erfindungsgemäßen Polysiloxane mit stickstoffhaltigen Gruppen mit Säuren der allgemeinen Formel H⁺A⁻. Die Anionen A⁻ sind gleiche oder verschiedene Gegenionen zu den positiven Ladungen, ausgewählt aus anorganischen oder organischen Anionen der Säuren H⁺A⁻, sowie deren Derivate. Bevorzugte Anionen sind beispielsweise Chlorid, Sulfat oder Hydrogensulfate, Carbonat oder Hydrogencarbonat, Phosphat oder Hydrogenphosphate, Acetat oder homologe Carboxylate mit linearen oder verzweigten, gesättigten oder olefinisch ungesättigten Alkylketten, aromatische Carboxylate, aus Aminosäuren gebildete Carboxylate, Citrate, Malonate, Fumarate, Maleate, substituierte und unsubstituierte Succinate und aus L-Hydroxycarbonsäuren gebildete Carboxylate, wie beispielsweise Lactat. Die erfindungsgmäßen Aminosiloxane und ihre ionischen Addukte können je nach Stabilität des gebildeten Addukts in Dissoziationsgleichgewichten vorliegen.

Ein weiterer Gegenstand der vorliegenden Erfindung sind Zusammensetzungen und Zubereitungen sowie die Verwendung dieser multifunktionellen Polysiloxane, die eine einfache Formulierung in Textil-Konditioniermitteln für die Erstausrüstung und in Textil-pflegenden Zusammensetzungen für die wiederholte Reinigung und Pflege und gute Applikationseigenschaften dieser von Textilien und Geweben gewährleisten.

Gegenstand der Erfindung sind weiterhin Zusammensetzungen enthaltend die erfindungsgemäßen multifunktionellen Siloxane und weitere Formulierungs- und Prozesshilfsmittel wie beispielsweise aliphatische und aromatische, protische und aprotische Lösungsmittel, Cotenside, Betaine, Emulgatoren, Fettalkoholalkoxylate, Mono-, Di- und Triglyceride, Öle synthetischen und natürlichen Ursprungs.
Unter einer Textil-konditionierenden Zusammensetzung wird in diesem Zusammenhang jede Zusammensetzung verstanden, die bei der Veredelung der produzierten Textilie vor dem Verkauf an den Endverbraucher eingesetzt wird. Unter einer Textil-pflegenden Zusammensetzung wird in diesem Zusammenhang jede Zusammensetzung verstanden, die damit behandelten textilen Flächengebilden einen vorteilhaften Effekt vermittelt, wie beispielsweise einen Textil-weichmachenden Effekt, Knitterfestigkeit bzw. die schädliche oder negative Effekte, die beim Reinigen und/oder Konditionieren und/oder Tragen auftreten können, wie beispielsweise Verblassen, Vergrauung, usw., reduziert. Besonders bevorzugt ist, dass die Textil-pflegende Zusammensetzung eine Textilweichmachende Zusammensetzung (Weichspüler) ist. Darüber hinaus betrifft die Erfindung auch Wasch- oder Reinigungsmittel, die die multifunktionalen Polysiloxane enthalten.

Gegenstand der Erfindung ist auch ein Verfahren in dem unterschiedliche funktionelle Silane in einem Kondensationsverfahren mit endständig hydroxyfunktionellen Polydimethylsiloxanen zu multifunktionellen, endverkappten Polysiloxanen umgesetzt werden können. In einem ersten Schritt des erfindungsgemäßen Verfahrens können Aminoalkyl-dialkoxysilane an der Aminogruppe weiter funktionalisiert werden und in einem zweiten Schritt in gezielten Verhältnissen zueinander mit hydroxyfunktionellen Polydimethylsiloxanen in Gegenwart von Trimethylsilylgruppen freisetzenden Reagenzien cokondensiert werden. Für den Fachmann unerwartet und überraschend ist, dass die Trimethylsilylgruppen selektiv die Silikonkette endverkappen, ohne die Aminogruppen oder Hydroxygruppen der seitenständigen organischen Modifikationen zu silylieren, wie es beispielsweise in der WO 99/17615 beschrieben ist.

Gegenstand der Erfindung ist weiterhin die Verwendung der erfindungsgemäßen multifunktionellen Siloxane in Textil-konditionierenden und Textil-pflegenden Zusammensetzungen, insbesondere in Textil-weichmachenden Zusammensetzungen (Weichspüler). Im Markt befindlichen Weichspüler sind wässrige Formulierungen, die als Hauptwirkungsbestandteil eine oder mehrere kationische Textil-weichmachende Verbindung, die eine oder mehrere langkettige Alkylgruppen in einem Molekül aufweisen, enthalten. Weit verbreitete kationische Textil-weichmachende Verbindungen umfassen beispielsweise Methyl-N-(2-hydroxyethyl)-N,N-di(talgacyloxyethyl)ammonium-Verbindungen oder N,N-Dimethyl-N,N-di(talgacyloxyethyl)ammonium-Verbindungen. Weitere geeignete Ammoniumverbindungen offenbart die US 2010/0184634 in den Absätzen [0027] bis [0068], deren diesbezüglicher expliziter Offenbarungsgehalt durch diese Bezugnahme Teil dieser Offenbarung wird. Die Weichspüler können darüber hinaus weitere Additive und Hilfsstoffe enthalten, insbesondere Parfüm, Farbstoffe, Viskositätsregulatoren, Entschäumer, Konservierungsmittel, organische Lösemittel, nicht siloxanhaltige Polymere und andere nicht erfindungsgemäße siloxanhaltige Polymere. Insbesondere können die erfindungsgemäßen Zusammensetzungen zwischen 0,001 und 25, besonders bevorzugt 0,01 bis 15 Gew.-% eines oder mehrerer unterschiedlicher Additive oder Hilfsstoffe enthalten.

Als Parfüm können alle für wässrige Weichspüler aus dem Stand der Technik als geeignet bekannte Duftstoffe oder Duftstoffmischungen eingesetzt werden, vorzugsweise in Form eines Parfümöles. Beispiele für Duft- bzw. Riechstoffe werden unter anderem in der DE 197 51 151 A1, Seite 4, Zeile 11 - 17 offenbart. Insbesondere können die erfindungsgemäßen Zusammensetzungen zwischen 0,01 und 10, besonders bevorzugt 0,1 bis 5 Gew.-% eines oder mehrerer Duftstoffe oder Duftstoffmischungen enthalten.

Als Farbstoffe können alle für wässrige Weichspüler aus dem Stand der Technik als geeignet bekannten Farbstoffe eingesetzt werden, wobei wasserlösliche Farbstoffe bevorzugt sind. Beispiele für geeignete wasserlösliche handelsübliche Farbstoffe sind SANDOLAN® Walkblau NBL 150 (Hersteller Clariant) und Sicovit® Azorubin 85 E122 (Hersteller BASF). Insbesondere können die erfindungsgemäßen Zusammensetzungen zwischen 0,001 und 0,1 Gew.-% besonders bevorzugt 0,002 bis 0,05 Gew.-% eines oder mehrerer Farbstoffe oder Farbstoffmischungen enthalten.

Als Viskositätsregulator zur Verringerung der Viskosität kann der wässrige Weichspüler ein Alkalimetall- oder Erdalkalimetallsalz, vorzugsweise Calciumchlorid, in einer Menge von 0,05 - 2 Gew.-% enthalten.
Als Viskositätsregler zur Erhöhung der Viskosität kann der wässrige Weichspüler einem aus dem Stand der Technik geeignet bekannten Verdicker enthalten, wobei die aus WO 2007/125005 bekannten Polyurethanverdicker bevorzugt sind. Beispiele für geeignete Verdicker sind TEGO® Visco Plus 3030 (Hersteller Evonik Tego Chemei), Acusol® 880 und 882 (Hersteller Rohm & Haas), Rheovis® CDE (Hersteller BASF), Rohagit® KF 720 F (Hersteller Evonik Röhm GmbH) und Polygel® K100 von Neochem GmbH.

Als Entschäumer können alle für wässrige Weichspüler aus dem Stand der Technik als geeignet bekannten Entschäumer eingesetzt werden. Beispiele für geeignete handelsübliche Entschäumer sind Dow Corning® DB-110A und TEGO® Antifoam® 7001 XP. Insbesondere können die erfindungsgemäßen Zusammensetzungen zwischen 0,0001 und 0,05 besonders bevorzugt 0,001 bis 0,01 Gew.-% eines oder mehrerer unterschiedlicher Entschäumer enthalten.

Als Konservierungsmittel kann der wässrige Weichspüler aus dem Stand der Technik als geeignet bekannte bakterizide und/oder fungizide Wirkstoffe enthalten, wobei wasserlösliche Wirkstoffe bevorzugt sind. Beispiele für geeignete handelsübliche Bakerizide sind Methylparaben, 2-Brom-2-nitro-1,3-propandiol, 2-Methyl-4-isothiazolin-3-on und 5-Chlor-2-methyl4-isothiazolin-3-on. Ebenso kann der wässrige Weichspüler als Konservierungsmittel einen Oxidationsinhibitor enthalten. Beispiele für geeignete handelsübliche Oxidationsinhibitoren sind Ascorbinsäure, 2,6-Di-tert-butyl-4-methlyphenol (BHT), Butylhydroxyanisol (BHA), Tocopherol und Propylgallat. Insbesondere können die erfindungsgemäßen Zusammensetzungen zwischen 0,0001 und 0,5, besonders bevorzugt 0,001 bis 0,2 Gew.-% eines oder mehrerer unterschiedlicher Konservierungsmittel enthalten. Insbesondere können die erfindungsgemäßen Zusammensetzungen zwischen 0,001 und 0,1, besonders bevorzugt 0,001 bis 0,01 Gew.-% eines oder mehrerer unterschiedlicher Oxidationsinhibitoren enthalten.

Als organische Lösemittel kann der Weichspüler kurzkettige Alkohole, Glykole und Glykolmonoether enthalten, wobei Ethanol, 2-Propanol, 1,2-Propandiol und Dipropylenglycol bevorzugt wird. Insbesondere können die erfindungsgemäßen Zusammensetzungen zwischen 0,1 und 10, besonders bevorzugt 0,2 bis 5 Gew.-% eines oder mehrerer unterschiedlicher organischer Lösemittel enthalten.

Der Weichspüler kann eines oder mehrere nicht siloxanhaltige Polymere enthalten. Beispiele dafür sind Carboxymethylcellulose, Polyethylenglycol, Poylvinylalkohol, Poly(meth)acrylate), Polyethylenimine oder Polysaccharide. Insbesondere können die erfindungsgemäßen Zusammensetzungen zwischen 0,01 und 25, besonders bevorzugt 0,1 bis 10 Gew.-% eines oder mehrerer unterschiedlicher nichtsiloxanhaltiger Polymere enthalten.

Weitere Gegenstand der Erfindung ist die Verwendung der erfindungsgemäßen multifunktionellen Siloxane in Wasch- oder Reinigungsmitteln. Durch das Einbringen in ein Wasch- oder Reinigungsmittel steht dem Verbraucher ein Textilpflegendes Wasch- oder Reinigungsmittel ("2in1"- Wasch- oder Reinigungsmittel) zur Verfügung und er braucht nicht zwei Mittel (Wasch- oder Reinigungsmittel und Weichspüler)zu dosieren, sowie keinen separaten Spülgang. Zusätzlich zu der Textil-pflegenden Zusammensetzung und den Tensiden können die Wasch- oder Reinigungsmittel weitere Inhaltsstoffe enthalten, die die anwendungstechnischen und/oder ästhetischen Eigenschaften des Wasch- oder Reinigungsmittels weiter verbessern. Bevorzugte Wasch- oder Reinigungsmittel enthalten zusätzlich einen oder mehrere Stoffe aus der Gruppe der Tenside, Gerüststoffe, Bleichmittel, Bleichaktivatoren, Enzyme, Parfüme, Parfümträger, Fluoreszenzmittel, Farbstoffe, Schauminhibitoren, Silikonöle, Antiredepositionsmittel, optischen Aufheller, Vergrauungsinhibitoren, Einlaufverhinderer, Knitterschutzmittel, Farbübertragungsinhibitoren, antimikrobiellen Wirkstoffe, Germizide, Fungizide, Antioxidantien, Konservierungsmittel, Korrosionsinhibitoren, Antistatika, Bittermittel, Bügelhilfsmittel, Phobier- und Imprägniermittel, Quell- und Schiebefestmittel, neutrale Füllsalze sowie UV-Absorber. Insbesondere können die erfindungsgemäßen Zusammensetzungen zwischen 0,001 und 90, besonders bevorzugt 0,01 bis 45 Gew.-% eines oder mehrerer der hier genannten weiteren Inhaltsstoffe enthalten.
Beispiel für einsetzbare Tenside werden in der WO 2007/115872, Seite 17, Zeile 28 bis Seite 21, Zeile 24 beschreiben. Beispiel für Gerüststoffe, Builder, Bleichmittel, Bleichaktivatoren, Bleichkatalysatoren und Enzymen werden in der WO 2007/115872, Seite 22, Zeile 7 bis Seite 25, Zeile 26 beschreiben. Antiredepositionsmittel, optischen Aufheller, Vergrauungsinhibitoren, Farbübertragungsinhibitoren werden beispielhaft in der WO 2007/115872 auf Seite 26, Zeile 15 bis Seite 28, Zeile 2 beschrieben. Beispiele von Knitterschutzmittel, antimikrobiellen Wirkstoffe, Germizide, Fungizide, Antioxidantien, Konservierungsmittel, Antistatika, Bügelhilfsmittel, UV-Absorber werden in der WO 2007/115872 auf den Seiten 28, Zeile 14 bis Seite 30, Zeile 22 beispielhaft beschrieben.

### Herstellungsverfahren der erfindungsgemäßen Siloxane:

Das Verfahren zur Herstellung der erfindungsgemäßen Polysiloxane beruht auf der Verwendung der nachfolgend beispielhaft genannten Verbindungen, wobei
a) endständig hydroxyfunktionelle lineare oder verzweigte Polysiloxane und deren Mischungen mit Dimethyldialkoxysilanen oder Methyltrialkoxysilanen oder Tetraethoxysilan, bevorzugt lineare endständig dihydroxyfunktionelle Polysiloxane
b) Hexamethyldisilazan oder mit unterschiedlichen Kohlenstoffresten substituierte Disilazane, wie beispielsweise Divinyltetramethyldisilazan, bevorzugt Hexamethyldisilazan;
c) 3-Aminopropylmethyldialkoxysilane, N-(2-Aminoethyl)-3-aminopropylmethyldialkoxysilane oder weitere funktionelle Dialkoxysilane, die lineare oder verzweigte, gesättigte oder ungesättigte Kohlenwasserstoffreste enthalten, die mit hydroxysubstituierten Amiden und/oder hydroxysubstituierten Carbamatstrukturen und/oder ethoxylierten Aminen und/oder Guanidin- oder Alkylenylguanidinstrukturen substituiert sind oder ausgewählt sind aus der Gruppe der Substanzen der Formeln 2a-2f, 2i. 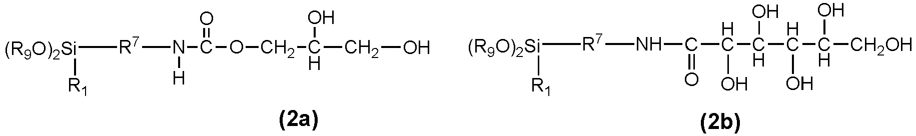 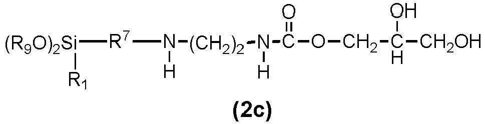 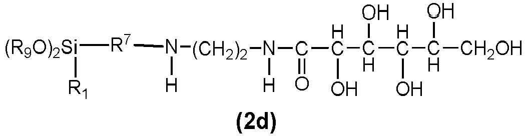 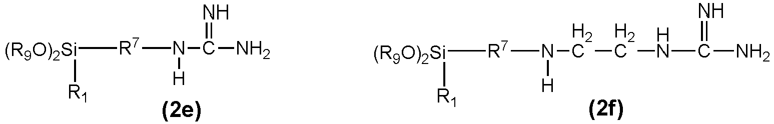 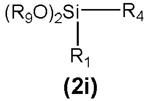
wobei R₁ und R₄ die vorgenannte Bedeutung der Formel 1 haben, R₈ = R₆, vorzugsweise ein Wasserstoffatom, eine Methyl- oder eine Carboxylgruppe, bevorzugt H oder Acetyl, und R₉ ein Alkyl- oder Acylrest, insbesondere Methyl, Ethyl oder Acetyl ist, miteinander umgesetzt werden. Die Silane werden zweckmäßigerweise als Monomer eingesetzt. Sofern es für die spätere Anwendung von Vorteil ist, können die Silane unter hydrolytisch sauren Bedingungen zu Oligomeren vorkondensiert werden, bevor durch Zugabe der dihydroxyfunktionellen Polysiloxane der Polymeraufbau initiiert wird.

Es kann vorteilhaft sein, das verwendete Silazan nicht stöchiometrisch, sondern in leichtem Überschuss zu verwenden. Die verwendeten Dialkoxysilane werden mit im Stand der Technik bekannten Synthesemethoden hergestellt. So erfolgt die Guanidierung von aminofunktionellen Silanen analog zu der in der JP 2002 167437 beschriebenen Guanidierung von Aminosiloxanen. Die Umsetzung von aminofunktionellen Siloxanen mit Glycerincarbonat oder Gluconolacton erfolgt in Anlehnung an die EP 1 972 330 A1 und das J. Phys. Chem. B 2010, Vol. 114, pp. 6872-6877.

Als Katalysatoren für die Hydrolyse- und Kondensationsreaktion werden Carbonsäuren wie beispielsweise Essigsäure, Propionsäure, Isononansäure oder Ölsäure verwendet. Die Reaktion kann unter Zugabe von geringen Wassermengen zur Beschleunigung der Hydrolyse durchgeführt werden, häufig ist in den ungetrocknet verwendeten Reagenzien ausreichend Feuchtigkeit vorhanden. Die Reaktion kann in Substanz oder in Gegenwart von Lösungsmitteln durchgeführt werden, wie beispielsweise in aliphatischen und aromatischen, protischen und aprotischen Lösungsmitteln, Glykolen, Ethern, Fettalkoholalkoxylaten, Mono-, Di- und Triglyceriden oder Ölen synthetischen und natürlichen Ursprungs. Die Verwendung von Lösungsmitteln ist beispielsweise dann vorteilhaft, wenn die Kettenlängen der gewünschten Strukturen hohe Viskositäten bedingen. Das Lösungsmittel kann vor, während oder nach der Reaktion zudosiert werden. Die Reaktion kann bei Temperaturen im Bereich von Raumtemperatur bis 150°C, bevorzugt bei 50-100°C durchgeführt werden. Die in der Hydrolyse freigesetzten Alkohole werden während oder nach der Reaktion unter Vakuum abdestilliert. Optional können ein Neutralisationsschritt und ein Filtrationsschritt erfolgen.

### Ausführungsbeispiele:

Die Aufnahme und Interpretation der NMR-Spektren ist dem Fachmann bekannt. Als Referenz sei hiermit eingeführt das Buch "NMR Spectra of Polymers and Polymer Additives" von A. Brandolini und D. Hills, erschienen im Jahr 2000 beim Verlag Marcel Dekker Inc..
Die molaren Verhältnisse der Substituenten der Polysiloxane untereinander lassen sich NMR-spektroskopisch, insbesondere per quantitativer ¹³C-NMR-Spektroskopischer Methoden und ergänzend durch selektive Stickstoffbestimmung der primären neben sekundärer neben tertiärer Aminstrukturen bestimmen.

### Synthesebeispiele:

### Vergleichsbeispiel 1: Herstellung eines Gluconolactampropyl-diethoxymethylsilans gemäß Formel 2b

In einem 250-ml-Vierhalskolben mit angeschlossenem KPG-Rührer, Tropftrichter, Rückflusskühler und Innenthermometer werden 35,62 g D(+)-Gluconsäure-δ-lacton (99%ig, Sigma Aldrich) in 35 g 2-Propanol bei 70°C suspendiert und 1 Stunde gerührt. Bei 75°C werden 38,62 g 3-Aminopropylmethyldiethoxysilan (Dynasylan® 1505, Evonik Degussa GmbH) in 5 Minuten zugetropft. Es wird weitere 4 Stunden bei 75°C gerührt. Man erhält ein klares, leicht gelbliches Produkt mit 64,8% Festkörpergehalt. Die Festkörpergehaltsbestimmung erfolgt durch zweistündige Abdestillation des Lösungsmittels am Rotationsverdampfer bei 60°C und 20 mbar und anschließende Auswaage. Das ¹³C-NMR-Spektrum zeigt eine vollständige Umsetzung mit dem Gluconolacton, denn es finden sich keine Signale bei 45 ppm die Restmengen einer CH₂-NH₂-Gruppe bedeuten würden.

### Beispiel 2: Herstellung einer ethanolischen Lösung enthaltend 3-Guanidinopropylmethyldiethoxysilan gemäß Formel 2c und 3-Aminopropylmethyldiethoxysilan

In einem 500-ml-Vierhalskolben mit angeschlossenem KPG-Rührer, Tropftrichter, Rückflusskühler und Innenthermometer werden 95,67 g 3-Aminopropylmethyldiethoxysilan (Dynasylan® 1505, Evonik Degussa GmbH) und 70 g Ethanol vorgelegt. Unter Rühren werden bei Raumtemperatur 27 g Essigsäure (99-100%ig, J.T.Baker) in 15 Minuten zugetropft. Es wird auf 79°C erhitzt und unter Rühren werden 10,51 g Cyanamid F 1000 (Alzchem Trostberg GmbH) gelöst in 30 g Ethanol über einen Zeitraum von 2 Stunden zugetropft. Es wird weitere 4 Stunden bei 79°C gerührt. Man erhält ein klares, farbloses Produkt mit 54,9% Festkörpergehalt. Das mittels ¹³C-NMR bestimmte molare Verhältnis von Aminopropylsilan zu Guanidinopropylsilan ist 3:2.

### Vergleichsbeispiel 3: Herstellung eines gluconolactampropyl- und aminopropylfunktionellen Polysiloxans

In einem 500-ml-Vierhalskolben mit angeschlossenem KPG-Rührer, Tropftrichter, Rückflusskühler und Innenthermometer werden 200 g dihydroxyfunktionelles Polydimethylsiloxan mit einer Kettenlänge von 47,2 Dimethylsiloxaneinheiten, 6,52 g 3-Aminopropylmethyldiethoxysilan (Dynasylan® 1505, Evonik Degussa GmbH) und 6,48 g der 64,8%igen 2-propanolischen Silanlösung aus Beispiel 1 unter Rühren auf 85°C aufgeheizt. 0,68 g Essigsäure (99-100%ig, J.T.Baker) werden zugegeben und Vakuum angelegt. Es wird eine Stunde bei 85°C und 20 mbar gerührt. Das Vakuum wird gebrochen und nach Zugabe von 1,28 g Hexamethyldisilazan (98,5%ig, ABCR GmbH) 1 Stunde bei 85°C und Raumdruck gerührt. Anschließend wird 1 Stunde bei 85°C und 20 mbar destilliert, 53,57 g Tegosoft® P (Evonik Goldschmidt GmbH) zugegeben und weitere 2 Stunden destilliert. Man erhält ein klares, leicht gelbliches Produkt der Viskosität 320.000 mPa*s bei 25°C. Der mittels ²⁹Si-NMR bestimmte Anteil der mit Trimethylsilylgruppen endverkappten Kettenenden beträgt 65% bezogen auf die Summe aller Kettenenden.

### Beispiel 4: Herstellung eines guanidinopropyl- und aminopropylfunktionellen Polysiloxans

In einem 1000-ml-Vierhalskolben mit angeschlossenem KPG-Rührer, Tropftrichter, Rückflusskühler und Innenthermometer werden 656,3 g dihydroxyfunktionelles Polydimethylsiloxan mit einer Kettenlänge von 47,6 Dimethylsiloxaneinheiten, 10,62 g 3-Aminopropylmethyldiethoxysilan (Dynasylan® 1505, Evonik Degussa GmbH) und 26,95 g der 54,9%igen ethanolischen Silanlösung aus Beispiel 2 unter Rühren auf 85°C aufgeheizt. Es wird eine Stunde bei 85°C und 20 mbar gerührt. Das Vakuum wird gebrochen und nach Zugabe von 4,18 g Hexamethyldisilazan (98,5%ig, ABCR GmbH) 1 Stunde bei 85°C und Raumdruck gerührt. Anschließend wird 3 Stunden bei 85°C und 20 mbar destilliert. Man erhält ein trübes, farbloses Produkt der Viskosität 41.500 mPa*s bei 25°C. Der mittels ²⁹Si-NMR bestimmte Anteil der mit Trimethylsilylgruppen endverkappten Kettenenden beträgt 80% bezogen auf die Summe aller Kettenenden. Die potentiometrische Titration des Produkts mit zwei unterschiedlich stark basischen, stickstoffhaltigen Gruppen weist zwei Umschlagspunkte auf.

### Vergleichsbeispiel 5: Herstellung eines octadecylmodifizierten Aminosiloxans

In einem 500-ml-Vierhalskolben mit angeschlossenem KPG-Rührer, Tropftrichter, Rückflusskühler und Innenthermometer werden 246,6 g dihydroxyfunktionelles Polydimethylsiloxan mit einer Kettenlänge von 47,2 Dimethylsiloxaneinheiten, 9,64 g 3-Aminopropylmethyldiethoxysilan (Dynasylan® 1505, Evonik Degussa GmbH), 2,01 g Octadecylmethyldimethoxysilan (Wacker AG) und 1,18 g Essigsäure (99-100%ig, J.T.Baker) unter Rühren auf 85°C aufgeheizt. Es wird eine Stunde bei 85°C und 20 mbar destilliert. Das Vakuum wird gebrochen und nach Zugabe von 1,28 g Hexamethyldisilazan (98,5%ig, ABCR GmbH) 1 Stunde bei 85°C und Raumdruck gerührt. Anschließend wird 3 Stunden bei 85°C und 20 mbar destilliert. Man erhält ein farbloses, leicht trübes Produkt der Viskosität 1520 mPa*s bei 25°C. Der mittels ²⁹Si-NMR bestimmte Anteil der mit Trimethylsilylgruppen endverkappten Kettenenden beträgt 75% bezogen auf die Summe aller Kettenenden.

### Anwendungsbeispiele Textilkonditionierung

### Allgemeine Formulierung:

5 bis 50 Gew.-% der erfindungsgemäßen Siloxane bzw. deren Lösungen werden in einem Becherglas mit Propellerrührer unter Rühren zu einer Mischung aus 1,25 bis 12,5 Gew.-% eines Laurylalkoholethoxylates mit einem Ethoxylierungsgrad von 6 - 10 oder einer Mischung mit verschiedenen Ethoxylierungsgraden, 0,05 bis 0,5 Gew.-% konzentrierter Essigsäure und 37,0 bis 93,7 Gew.-% Wasser gegeben.

### Formulierungsbeispiel 1 - erfindungsgemäß:

20 Gew.-% des Produktes des Synthesebeispiels 1 werden in einem Becherglas mit Propellerrührer unter Rühren zu einer Mischung aus 8,0 Gew.-% eines Laurylalkoholethoxylates mit einem Ethoxylierungsgrad von 6 und 2,0 Gew,-% mit einem Ethoxylierungsgrad von 10, 0,4 Gew.-% konzentrierter Essigsäure und 69,6 Gew.-% Wasser gegeben. Man erhält eine weiße niedrigviskose Formulierung.

Analog zur Herstellung der allgemeinen Formulierung wurden die in der Tabelle 1 aufgeführten Formulierungen hergestellt. Bei dem Vergleichsprodukt Biosoft 09 der Firma BT Biotex SDN BHD Malaysia handelt es sich um ein aminofunktionelles Siliconfluid, das als Weichgriffmittel für Fasern und Textilien angewendet werden kann.

**Tabelle 1:**

| Hergestellte Formulierungen | | |
|---|---|---|
| Formulierungsbeispiel | verwendetes Produkt | Erfindungsgemäß |
| 1 | Synthesebeispiel 4 | ja |
| 2 | Biosoft 09 | nein |

### Applikationsbeispiele:

Zur Überprüfung des Griffes sowie der Hydrophilie der erfindungsgemäßen Produkte wurden aus nativen Fasern bestehende Produkte mit folgendem Verfahren ausgerüstet:

### Foulardverfahren:

Zur Ausprüfung des Weichgriffs der jeweiligen Emulsionen wurde Baumwollwirkware (160 g/m²) und Baumwoll-Frottierware (400 g/m²) mit einer Flotte, die jeweils 12,5 g/l der entsprechenden Emulsion enthielt, foulardiert, auf ca. 100 % Flottenaufnahme abgequetscht und bei 100 °C drei Minuten lang getrocknet.

Zur Ausprüfung der Hydrophilie wurden Baumwollwebware (200 g/m²) mit einer Flotte, die jeweils 150 g/l der entsprechenden Emulsion enthielt, foulardiert und auf ca. 100 % Flottenaufnahme abgequetscht und bei 130 °C drei bis fünf Minuten lang getrocknet.

### Ausziehverfahren:

Zur Ausprüfung des Weichgriffs wurden Baumwollmaschenware (160 g/m²) und Baumwollfrottierware (400 g/m²) in einer 0,025 Gew.-%igen (basierend auf Siliconwirkstoff) Flotte mit einem Flottenverhältnis von 1 zu 12 für 20 min unter leichter Durchmischung getaucht, leicht ausgewrungen und bei 100 °C im Ofen getrocknet. Zur Ausprüfung der Hydrophilie wurde Baumwollwebware (200 g/m²) in einer 0,025 Gew.-%igen (basierend auf Siliconwirkstoff) Flotte mit einem Flottenverhältnis von 1 zu 120 für 20 min unter leichter Durchmischung getaucht und bei 100 °C im Ofen getrocknet.

### Testmethoden:

### Griffbeurteilung:

Zur Beurteilung des Warengriffes wurde ein erfahrenes Team zusammengestellt, das die anonymisierten Griffmuster, der mit den Emulsionen ausgerüsteten Wirk- und Frottierwaren, mit Hilfe eines Handpanneltests bewertete. Bei den Griffmustern aus Maschenware wurde zusätzlich eine nicht offensichtlich gekennzeichnete unbehandelte Probe hinzugelegt.

### Waschvorgang:

Die Waschvorgänge wurden in der handelsüblichen Waschmaschine Miele Novotronic W 918 mit Buntwäsche ohne Vorwaschen bei 40 °C mit wfk Standardwaschmittel IECA-Base und 3 kg Baumwoll-Ballastgewebe gewaschen. Zuletzt wurde das so behandelte Gewebe 12 Stunden lang bei Raumtemperatur getrocknet.

### Prüfung der Hydrophilie:

Zur Überprüfung der Hydrophilie wurde die an DIN 53924 angelehnte interne Prüfmethode zur Messung der Steighöhe von Wasser verwendet. Dabei wird das ausgerüstete Baumwolltestgewebe in jeweils fünf 25 cm lange und 1,5 cm breite Streifen geschnitten, mit einem wasserlöslichen Stift markiert und an einer Halterung senkrecht straff aber ohne Spannung befestigt. Die Halterung wird anschließend für fünf Minuten so in ein Wasserbecken gestellt, dass 2 cm der Streifen ins Wasser eintauchen. Nachdem die Halterung 10 Minuten außerhalb des Wasserbeckens gestanden hat, wird die Steighöhe in cm abgelesen und gegen den Blindwert (Steighöhe der unbehandelten Baumwollstreifen x cm = 100 %) bestimmt und in % vom Blindwert angegeben.

Die Testergebnisse bezüglich des Weichgriffs sind in den Tabellen 2, 3 und 4 und bezüglich der Hydrophilie in der Tabelle 5 aufgeführt.

**Tabelle 2:**

| Weichgriffbeurteilung auf Baumwollfrottierware nach Applikation durch Foulard | | | | |
|---|---|---|---|---|
| Eingesetzte Formulierung | Vor der Wäsche | Nach der 1. Wäsche | Nach der 3. Wäsche | Nach der 5. Wäsche |
| 1 | +++ | +++ | ++ | ++ |
| 2 | ++ | ++ | + | + |
| Unbehandelt | - | - | - | - |

| | | | | |
|---|---|---|---|---|
| +++ exzellent, ++ sehr gut, + gut, o befriedigend, - schlecht | | | | |

**Tabelle 3:**

| Weichgriffbeurteilung auf Baumwollwirkware bzw. Baumwollfrottierware nach Applikation durch Foulard im Vergleich mit handelsüblichem hydrophilem Aminosiloxan | | |
|---|---|---|
| Eingesetzte Formulierung | Baumwollwirkware | Baumwollfrottierware |
| 1 (erfindungsgemäß) | +++ | +++ |
| 2 (nicht erfindungsgemäß) | ++ | ++ |
| Unbehandelt | - | - |

| | | |
|---|---|---|
| +++ exzellent, ++ sehr gut, + gut, o befriedigend, - schlecht | | |

**Tabelle 4:**

| Weichgriffbeurteilung nach Applikation durch Foulard und Ausziehverfahren | | | | |
|---|---|---|---|---|
| | Foulard | | Ausziehverfahren | |
| Eingesetzte Formulierung | Baumwollwirkware | Baumwollfrottierware | Baumwollwirkware | Baumwollfrottierware |
| 1 (erfindungsgemäß) | +++ | +++ | +++ | +++ |
| 2 (nicht erfindungsgemäß) | ++ | ++ | ++ | ++ |
| Unbehandelt | - | - | - | - |

| | | | | |
|---|---|---|---|---|
| +++ exzellent, ++ sehr gut, + gut, o befriedigend, - schlecht | | | | |

**Tabelle 5:**

| Rücknetzverhalten auf Baumwollwebware in % der Steighöhe des unbehandelten Baumwollstreifens nach Applikation mit Foulard | |
|---|---|
| Formulierung 1 (erfindungsgemäß) | 85 |
| Formulierung 2 (erfindungsgemäß) | 75 |
| Unbehandelt | 100 |

### Zusammenfassung der Beurteilung:

Es resultiert ein weicher sehr flauschiger und seidiger Griff der mit den erfindungsgemäßen Produkten ausgerüsteten Gewebe (zum Beispiel Formulierung 1, Tabellen 3 und 4). Darüber hinaus wies die so ausgerüstete Ware eine hohe Sprungelastizität und verbesserte Entknitterungseigenschaften auf.
Im Besonderen ist zu erkennen, dass der weich machende Effekt des Formulierungsbeispiels 1 nach Applikation durch Ausziehverfahren dem Formulierungsbeispiel 2 überlegen ist (Tabelle 4). Hinzu kommt eine bessere Wasseraufnahme des Gewebes, welche durch den höheren Rücknetzwert wiedergegeben wird (Tabelle 5). Eine bessere Permanenz wird durch die Ergebnisse in Tabelle 2 belegt.

### Anwendungsbeispiele Textilpflege:

Zur Bestimmung der weichmachenden Wirkung der erfindungsgemäßen Siloxane auf textilen Geweben werden Baumwolltücher damit behandelt. Dazu werden von den Siloxanen Emulsionen nach der folgenden Vorschrift hergestellt:
20 Teile eines auf 40°C bis 80°C erwärmten erfindungsgemäßen Polysiloxans werden in einem Becherglas mit Propellerrührer unter Rühren vorgelegt. Anschließend werden der Reihe nach 5 bis 25 Gew.-Teile Dipropylenglykol, 5 bis 25 Gew.-Teile eines Fettalkoholethoxylates mit einem Ethoxylierungsgrad von 6 unter Rühren hinzu gegeben. Zuletzt wird mit Wasser auf 100 Gew.-Teile aufgefüllt und solange nachgerührt bis die Mischung auf Raumtemperatur abgekühlt ist, mindestens jedoch 15 min.

### Vorbehandlung des Baumwollgewebes:

Baumwollfrottiergewebe von 80 cm auf 50 cm mit einem Flächengewicht von ca. 350 g/m² wurden zweimal mit Vollwaschpulver gewaschen, zweimal gespült, geschleudert und einlagig auf einer Leine hängend an der Luft getrocknet.

### Behandlung von Baumwollgewebe:

Eine wie oben beschriebene Formulierung eines erfindungsgemäßen Siloxans wurde mit kaltem Leitungswasser zu einer Spüllösung verdünnt, die 0,025 Gew% an erfindungsgemäßem Siloxan enthielt.
Die Baumwolltücher wurden 10 min in zwei Liter der Spüllösung getaucht. Dabei ist zu beachten, daß die Tücher gleichmäßig von der Spüllösung benetzt werden. Anschließend wurden die Tücher geschleudert und bei Raumtemperatur einlagig auf einer Leine hängend getrocknet. Die behandelten Baumwollfrottiertücher wurden in 10 gleiche Stücke von 16 cm auf 25 cm geschnitten.
Zur Beurteilung des Weichgriffes wurde ein erfahrenes Team aus 9 Testpersonen zusammengestellt, das die anonymisierten Griffmuster, der mit den Emulsionen ausgerüsteten Baumwollgewebe, mit Hilfe eines Handpanneltests bewertete. Dabei erhält jede Testperson ein eignes Baumwolltuch. Die Beurteilung erfolgt dabei auf einer Skala von 0 (hart und unangenehm im Griff) bis 5 (weich und angenehm im Griff) mit der Möglichkeit zu ganzzahligen Zwischenwerten.
Zur Beurteilung des Weichgriffes werden die Einzelbewertungen summiert, so dass sich bei 9 Testpersonen ein maximaler Weichgriff von 45 ergeben kann.

Bei den Griffmustern wurde zusätzlich immer eine nicht offensichtlich gekennzeichnete unbehandelte Probe(Blindwert) hinzugelegt.

### Vergleichsbeispiel:

Eine handelsübliche Mikroemulsion eines mit Aminogruppen funktionalisierten Siloxans, zum Beispiel TEGOSIVIN® IE 11/59 mit einem Feststoffgehalt von 20 Gew.-%, die dem Stand der Technik entspricht.

**Tabelle 6**

| Zusammenfassung der Weichgriffergebnisse | | |
|---|---|---|
| Beispiel | Baumwollgewebe behandelt mit Siloxan aus Synthesebeispiel | Weichgriff |
| 6 | 3 (Vergleichsbeispiel) | 25 |
| 7 | 4 | 42 |
| 8 | 5 (Vergleichsbeispiel) | 30 |
| 9 | Vergleichsbeispiel | 20 |
| 10 | ohne Siloxan ("Blindwert") | 0 |

Aus den Daten in Tabelle 1 ist deutlich zu ersehen, dass die erfindungsgemäßen modifizierten Siloxane einen verbesserten bis stark verbesserten Weichgriff gegenüber einem Siloxan des Standes der Technik erzielen.

## Patentansprüche

1. Polysiloxane gemäß Formel 1
Mₐ D_{b} D^{A}_{c} D^{B}_{d} D^{c}ₑ T_{f} Q_{g} (Formel 1)
wobei
M = [R²R¹₂SiO_{1/2}]
D = [R¹₂SiO_{2/2}]
D^{A} = [R¹Si(R⁷NHR³)O_{2/2}]
D^{b} = [R¹SiR⁴O_{2/2}]
D^{C} = [R¹SiR⁵O_{2/2}]
T = [R¹SiO_{3/2}]
Q = [SiO_{4/2}]
mit
R¹ unabhängig voneinander gleiche oder verschiedene lineare oder verzweigte, gesättigte oder ungesättigte Kohlenwasserstoffreste mit 1 bis 30 Kohlenstoffatomen oder auch aromatische Kohlenwasserstoffreste mit 6 bis 30 Kohlenstoffatomen,
R² unabhängig voneinander gleich R¹, ein Alkoxyrest oder eine Hydroxygruppe,
R³ unabhängig voneinander Wasserstoff oder ein mit Stickstoffatomen substituierter Kohlenwasserstoffrest,
R⁴ unabhängig voneinander gleiche oder verschiedene lineare oder verzweigte, gesättigte oder olefinisch ungesättigte Kohlenwasserstoffreste mit 8 bis 30 Kohlenstoffatomen, beispielsweise Decyl-, Dodecyl, Tetradecyl-, Hexadecyl-, Octadecyl-,
R⁵ unabhängig voneinander gleiche oder verschiedene Substituenten ausgewählt aus der Gruppe der Substituenten der Formeln 1a bis 1f 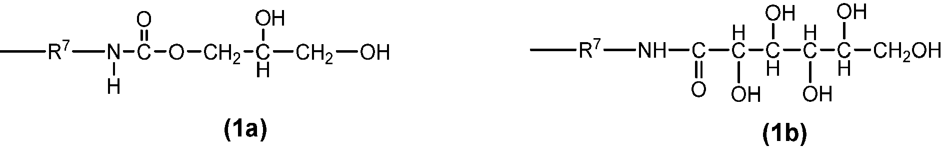 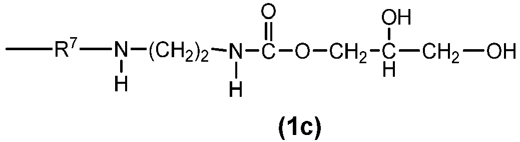 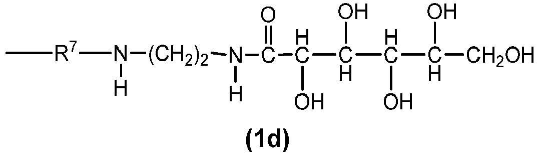 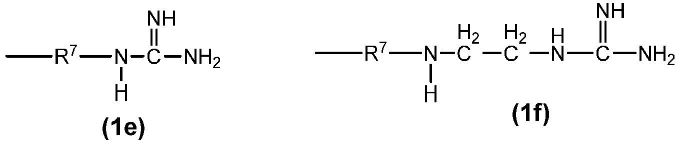 wobei
R⁷ unabhängig voneinander gleiche oder verschiedene lineare oder verzweigte, gesättigte oder ungesättigte, divalente Kohlenwasserstoffgruppe mit 1 bis 20 Kohlenstoffatomen,
a = 2 - 20,
b = 10 bis 5000,
c = 1 bis 500,
d = 0 bis 500,
e = > 0 bis 500,
f = 0 bis 20,
g = 0 bis 20,
mit c > 0,5*e
oder deren ionischen Addukte mit protischen Reaktanden H⁺A⁻,
mit der Maßgabe, dass mindestens 50%, bevorzugt mindestens 70% der Reste R² = R¹ sind.

2. Ionische Addukte gemäß Anspruch 1 , **dadurch gekennzeichnet, dass** Anionen A⁻ gleiche oder verschiedene Gegenionen zu den positiven Ladungen an den protonierten, stickstoffhaltigen Gruppen sind, ausgewählt aus anorganischen oder organischen Anionen der Säuren H⁺A⁻, sowie deren Derivate.

3. Zusammensetzungen enthaltend Polysiloxane gemäß einem der vorstehenden Ansprüche.

4. Zusammensetzungen enthaltend Polysiloxane gemäß Anspruch 3 und weitere Formulierungs- und Prozesshilfsmittel wie beispielsweise aliphatische und aromatische, protische und aprotische Lösungsmittel, Cotenside, Betaine, Emulgatoren, Fettalkoholalkoxylate, Mono-, Di- und Triglyceride, Öle synthetischen und natürlichen Ursprungs

5. Verwendung von Zusammensetzungen gemäß Anspruch 3 oder 4 als Textil-Konditioniermitteln für die Erstausrüstung und/oder als Textil-pflegende Zusammensetzungen für die wiederholte Reinigung und Pflege von Textilien und Geweben.

6. Verwendung von Zusammensetzungen gemäß Anspruch 3oder 4 in Wasch- und Reinigungsmitteln

7. Verfahren zur Herstellung von Siloxanen gemäß Anspruch 1 oder 2, **dadurch gekennzeichnet, dass** unterschiedliche funktionelle Silane in einem Kondensationsverfahren mit endständig hydroxyfunktionellen Polydimethylsiloxanen zu multifunktionellen, endverkappten Polysiloxanen umgesetzt werden,
wobei
in einem ersten Schritt Aminoalkyl-dialkoxysilane an der Aminogruppe funktionalisiert werden und
in einem zweiten Schritt mit hydroxyfunktionellen Polydimethylsiloxanen in Gegenwart von Trimethylsilylgruppen freisetzenden Reagenzien cokondensiert werden.

8. Verfahren gemäß Anspruch 7, **dadurch gekennzeichnet, dass** Trimethylsilylgruppen selektiv die Silikonkette endverkappen, ohne die Aminogruppen oder Hydroxygruppen der seitenständigen organischen Modifikationen zu silylieren.

9. Verfahren gemäß Anspruch 7oder 8, **dadurch gekennzeichnet, dass**
a) endständig hydroxyfunktionelle lineare oder verzweigte Polysiloxane und deren Mischungen mit Dimethyldialkoxysilanen oder Methyltrialkoxysilanen oder Tetraethoxysilan,
b) Hexamethyldisilazan oder mit unterschiedlichen Kohlenstoffresten substituierte Disilazane und
c) 3-Aminopropylmethyldialkoxysilane oder N-(2-Aminoethyl)-3-aminopropylmethyldialkoxysilane die mit Substanzen der Formeln 2a-f und 2i 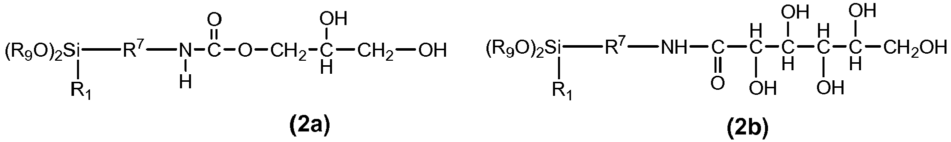 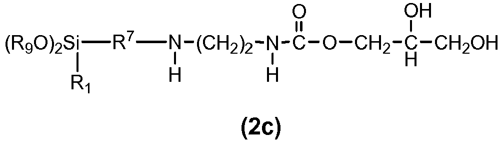 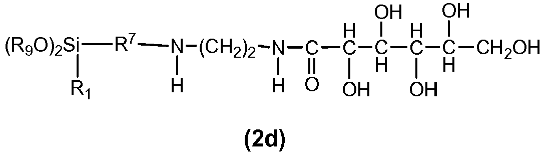 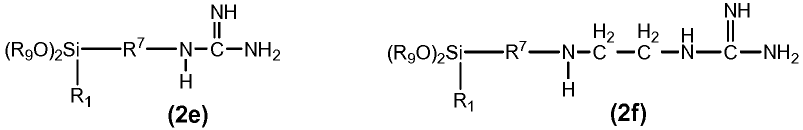 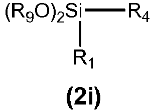 wobei R₁ und R₇ die vorgenannte Bedeutung entsprechend Formel 1 haben, R₈ ein Wasserstoffatom, eine Methyl oder eine Carboxylgruppe ist und R₉ ein Alkyl- oder Acylrest ist,
miteinander umgesetzt werden.

## Claims

1. Polysiloxanes of formula 1
Mₐ D_{b} D^{A}_{c} D^{B}_{d} D^{c}ₑ T_{f} Q_{g} (formula 1)
where
M = [R²R¹₂SiO_{1/2}]
D = [R¹₂SiO_{2/2}]
D^{A} = [R¹Si(R⁷NHR³)O_{2/2}]
D^{B} = [R¹SiR⁴O_{2/2}]
D^{C} = [R¹SiR⁵O_{2/2}] = [R¹SiO_{3/2}]
Q = [SiO_{4/2}]
in which
R¹ in each occurrence independently represents identical or different linear or branched, saturated or unsaturated hydrocarbon radicals having 1 to 30 carbon atoms or else aromatic hydrocarbon radicals having 6 to 30 carbon atoms,
R² in each occurrence independently represents R¹, an alkoxy radical or a hydroxyl group,
R³ in each occurrence independently represents hydrogen or a hydrocarbon radical substituted with nitrogen atoms,
R⁴ in each occurrence independently represents identical or different linear or branched, saturated or olefinically unsaturated hydrocarbon radicals having 8 to 30 carbon atoms, for example decyl, dodecyl, tetradecyl, hexadecyl, octadecyl,
R⁵ in each occurrence independently represents identical or different substituents selected from the group of substituents of formulae 1a to 1f 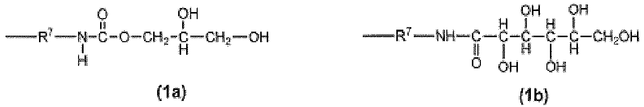 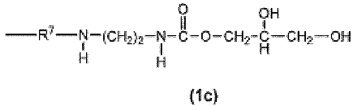 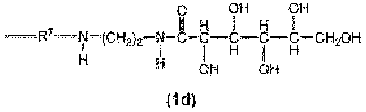 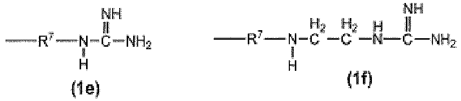
R⁷ in each occurrence independently represents identical or different linear or branched, saturated or unsaturated, divalent hydrocarbon groups having 1 to 20 carbon atoms,
a = 2-20,
b = 10 to 5000,
c = 1 to 500,
d = 0 to 500,
e = >0 to 500,
f = 0 to 20,
g = 0 to 20,
with c>0.5*e
or their ionic adducts with protic reactants H⁺A⁻,
with the proviso that at least 50% and preferably at least 70% of the R² radicals are = R¹

2. Ionic adducts according to Claim 1, **characterized in that** anions A⁻ are identical or different counterions to the positive charges on the protonated nitrogen-containing groups, selected from organic or inorganic anions of the acids H⁺A⁻ and also derivatives thereof.

3. Compositions comprising polysiloxanes according to either preceding claim.

4. Compositions comprising polysiloxanes according to Claim 3 and further formulation and processing auxiliaries such as for example aliphatic and aromatic, protic and aprotic solvents, cosurfactants, betaines, emulsifiers, fatty alcohol alkoxylates, mono-, di- and triglycerides, oils of synthetic and natural origin.

5. Use of compositions according to Claim 3 or 4 as textile conditioners for OEM finishing and/or as textile re-conditioning compositions for the repeated cleaning and reconditioning of textiles and fabrics.

6. Use of compositions according to Claim 3 or 4 in laundry detergents and cleaners.

7. Process for preparing siloxanes according to Claim 1 or 2, **characterized in that** different functional silanes are reacted in a condensation process with terminally hydroxyl-functional polydimethylsiloxanes to form multifunctional endblocked polysiloxanes,
wherein
aminoalkyldialkoxysilanes are functionalized at the amino group in a first step and
cocondensed in a second step with hydroxyl-functional polydimethylsiloxanes in the presence of reagents releasing trimethylsilyl groups.

8. Process according to Claim 7, **characterized in that** trimethylsilyl groups endblock the silicone chain selectively without silating the amino groups or hydroxyl groups of the lateral organic modifications.

9. Process according to Claim 7 or 8, **characterized in that**
a) terminally hydroxyl-functional linear or branched polysiloxanes and their mixtures with dimethyldialkoxysilanes or methyltrialkoxysilanes or tetraethoxysilane,
b) hexamethyldisilazane, or disilazanes which are substituted with different carbon radicals, and
c) 3-aminopropylmethyldialkoxysilanes or N-(2-aminoethyl)-3-aminopropylmethyldialkoxysilanes with substances of formulae 2a-f and 2i 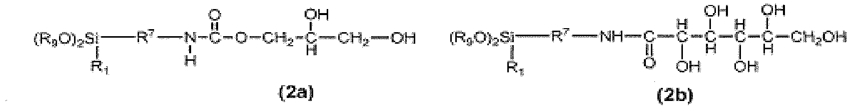 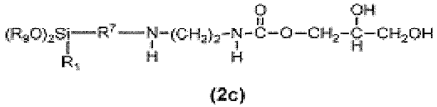 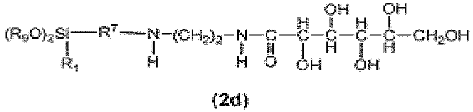 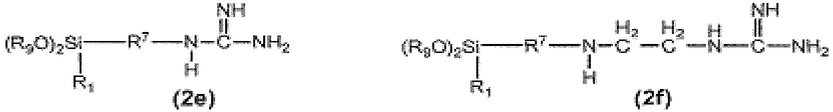 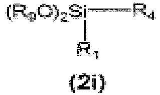 where R₁ and R₇ are each as defined for formula 1,
R₈ is a hydrogen atom, a methyl group or a carboxyl group and R₉ is an alkyl or acyl radical,
are reacted with one another.

## Revendications

1. Polysiloxanes selon la formule 1 Mₐ
D_{b} D^{A}_{c} D^{B}_{d} D^{c}ₑ Tₗ Q_{g} (formule 1)
M = (R²R¹₂SiO_{1/2}]
D = [R¹₂SiO_{2/2}]
D^{A} = [R¹Si(R⁷NHR³)O_{2/2}]
D^{B} = [R¹SiR⁴O_{2/2}]
D^{C} = [R¹SiR⁵O_{2/2}]
T = [R¹SiO_{3/2}]
Q = [SiO_{4/2}]
R¹ étant indépendamment les uns des autres des radicaux hydrocarbonés linéaires ou ramifiés, saturés ou insaturés, identiques ou différents comportant 1 à 30 atome(s) de carbone ou encore des radicaux hydrocarbonés aromatiques comportant 6 à 30 atomes de carbone,
R² étant indépendamment les uns des autres égaux à R¹, un radical alcoxy ou un groupe hydroxy,
R³ étant indépendamment les uns des autres hydrogène ou un radical hydrocarboné substitué par des atomes d'azote,
R⁴ étant indépendamment les uns des autres des radicaux hydrocarbonés linéaires ou ramifiés, saturés ou oléfiniquement insaturés, identiques ou différents comportant 8 à 30 atomes de carbone, par exemple décyle-, dodécyle, tétradécyle-, hexadécyle-, octadécyle-,
R⁵ étant indépendamment les uns des autres des substituants identiques ou différents choisis dans le groupe des substituants des formules 1a à 1f 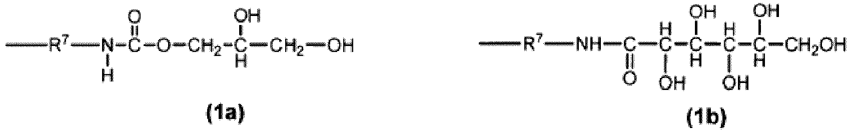 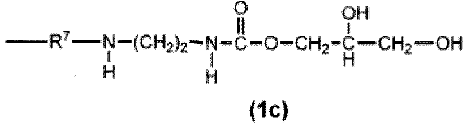 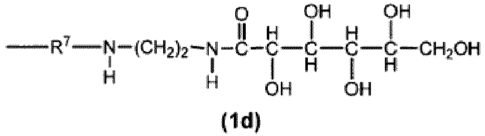 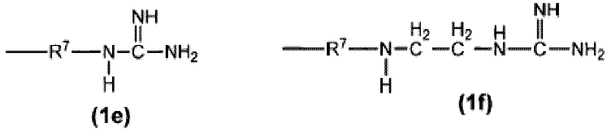
R⁷ indépendamment les uns des autres étant des groupes hydrocarbonés divalents linéaires ou ramifiés, saturés ou insaturés, identiques ou différents comportant 1 à 20 atome(s) de carbone,
a = 2 à 20,
b = 10 à 5000,
c = 1 à 500,
d = 0 à 500,
e = > 0 à 500,
f = 0 à 20,
g = 0 à 20,
avec c > 0,5 x e
ou leurs adduits ioniques avec des réactifs protiques H⁺A⁻,
étant entendu qu'au moins 50 %, préférablement au moins 70 % des radicaux R² = R¹.

2. Adduits ioniques selon la revendication 1, **caractérisés en ce que** les anions A⁻ sont des contre-ions, identiques ou différents, aux charges positives au niveau des groupes protonés contenant de l'azote, choisis parmi des anions inorganiques ou organiques des acides H⁺A⁻, ainsi que leurs dérivés.

3. Compositions contenant des polysiloxanes selon l'une quelconque des revendications précédentes.

4. Compositions contenant des polysiloxanes selon la revendication 3 et d'autres adjuvants de formulation et de procédé comme par exemple des solvants aliphatiques et aromatiques, protiques et aprotiques, des co-tensioactifs, des bétaïnes, des émulsifiants, des alcoxylates d'alcools gras, des monoglycérides, des diglycérides et des triglycérides, des huiles d'origine synthétique et naturelle.

5. Utilisation de compositions selon la revendication 3 ou 4 en tant qu'agents de conditionnement de textiles pour la première application et/ou en tant que compositions d'entretien de textiles pour le nettoyage et l'entretien répétés de textiles et de tissus.

6. Utilisation de compositions selon la revendication 3 ou 4 dans des produits de lavage et de nettoyage.

7. Procédé pour la préparation de siloxanes selon la revendication 1 ou 2, **caractérisé en ce que** des silanes fonctionnels divers sont transformés, dans un procédé de condensation, avec des polydiméthylsiloxanes à fonctionnalités hydroxy terminales en des polysiloxanes multifonctionnels à coiffe terminale,
dans une première étape, des aminoalkyl-dialcoxysilanes étant fonctionnalisés au niveau du groupe amino et
dans une deuxième étape, étant co-condensés avec des polydiméthylsiloxanes à fonctionnalité hydroxy en présence de réactifs libérant des groupes triméthylsilyle.

8. Procédé selon la revendication 7, **caractérisé en ce que** des groupes triméthylsilyle coiffent de manière terminale et sélectivement la chaîne siliconée, sans silyler les groupes amino ou les groupes hydroxy des modifications organiques latérales.

9. Procédé selon la revendication 7 ou 8, **caractérisé en ce que**
a) des polysiloxanes linéaires ou ramifiés à fonctionnalités hydroxy terminales et leurs mélanges avec des diméthyldialcoxysilanes ou des méthyltrialcoxysilanes ou le tétraéthoxysilane,
b) l'héxaméthyldisilazane ou des disilazanes substitués par des radicaux carbonés différents et
c) des 3-aminopropylméthyldialcoxysilanes ou des N-(2-aminoéthyl)-3-aminopropylméthyldialcoxysilanes sont mis à réagir ensemble avec des substances des formules 2a à 2f et 2i 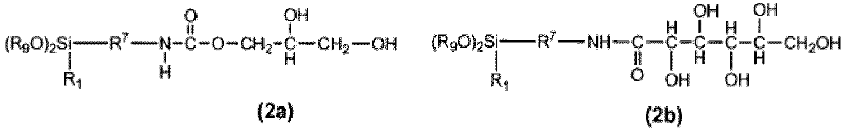 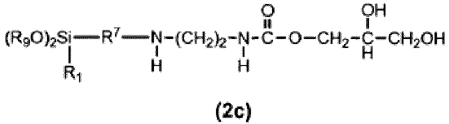 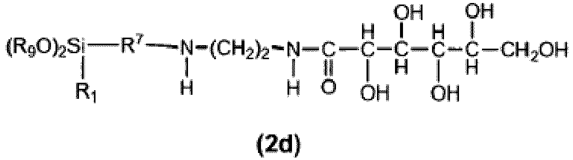 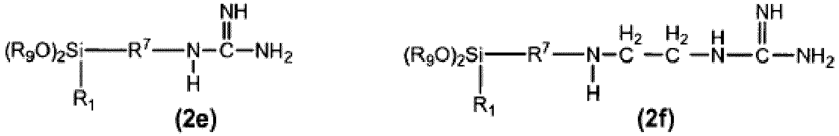 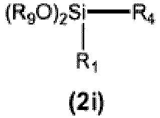 et R₇ possédant les significations mentionnées précédemment correspondant à la formule 1, R₈ étant un atome d'hydrogène, méthyle ou un groupe carboxyle et R₉ étant un radical alkyle ou acyle.
